Europäisches Patentamt

European Patent Office

Office européen des brevets

(11) Veröffentlichungsnummer: **0 477 797 B1**

## (12) EUROPÄISCHE PATENTSCHRIFT

(45) Veröffentlichungstag der Patentschrift: **13.12.95**

(21) Anmeldenummer: **91116044.8**

(22) Anmeldetag: **20.09.91**

Die Akte enthält technische Angaben, die nach dem Eingang der Anmeldung eingereicht wurden und die nicht in dieser Patentschrift enthalten sind.

(51) Int. Cl.6: **B32B 27/32**, B32B 15/08, B32B 31/24, B32B 31/26, B32B 31/28, B32B 17/10, B65B 19/22

(54) **Beidseitig siegelbare, biaxial orientierte Polyolefinmehrschichtfolie mit sehr guten optischen Eigenschaften**

(30) Priorität: **28.09.90 DE 4030669**

(43) Veröffentlichungstag der Anmeldung:
**01.04.92 Patentblatt 92/14**

(45) Bekanntmachung des Hinweises auf die Patenterteilung:
**13.12.95 Patentblatt 95/50**

(84) Benannte Vertragsstaaten:
**BE DE ES FR GB IT NL**

(56) Entgegenhaltungen:
EP-A- 0 164 493
EP-A- 0 194 588
EP-A- 0 298 730
EP-A- 0 298 731
DE-A- 3 832 880

(73) Patentinhaber: **HOECHST AKTIENGESELL-SCHAFT**

**D-65926 Frankfurt am Main (DE)**

(72) Erfinder: **Murschall, Ursula, Dr.**
**Im Bacchuswinkel 11**
**W-6505 Nierstein (DE)**
Erfinder: **Peiffer, Herbert, Dr.**
**Thüringer Strasse 26**
**W-6500 Mainz-Finthen (DE)**
Erfinder: **Schlögl, Gunter, Dr.**
**Finkenweg 2**
**W-6233 Kelkheim (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine beidseitig siegelbare transparente, coextrudierte Polyolefinmehrschichtfolie, wobei die Basisschicht im wesentlichen aus Polypropylen, das peroxidisch abgebaut ist, und die Deckschichten im wesentlichen aus siegelbaren Olefinpolymeren bestehen. Die Erfindung betrifft ferner ein Verfahren zur Herstellung der Folie und ihre Verwendung.

Beidseitig siegelbare, biaxial orientierte Polyolefinmehrschichtfolien, bei denen die Basisschicht aus Propylenhomopolymeren und die beiden Siegelschichten (Außenschichten oder Deckschichten) aus siegelbaren Olefinpolymeren bestehen, sind in zahlreichen Druckschriften beschrieben (z. B. EP-A-0 194 588, EP-A-0 008 904, US-A-4 419 411). Diese Polyolefinmehrschichtfolien besitzen die für Verpackungsfolien wichtigen Eigenschaften, nämlich einen großen Siegelbereich, eine gute Heißsiegelbarkeit, eine relativ hohe Kratzfestigkeit, eine geringe Reibung und damit gute Laufeigenschaften auf schnellaufenden Verpackungsmaschinen unterschiedlichen Typs.

Die beschriebenen Folien lassen aber hinsichtlich der optischen Eigenschaften (Transparenz und Glanz) zu wünschen übrig.

Die EP-A-0 298 730 beschreibt beidseitig siegelbare transparente Polyolefinmehrschichtfolien mit einer Basisschicht aus einem Propylenpolymeren mit einem Schmelzflußindex im Bereich von 1,5 bis 18 und einer Polydispersität von 3,0 bis 5,5. Die Polydispersität ist ein Maß für die Molmassenverteilung des Polymeren und wird durch geeignete Maßnahmen an konventionellem Polypropylen wie beispielsweise durch peroxidischen Abbau eingestellt.

Die EP-A-0 298 731 beschreibt eine analoge Entwicklung für vakuolenhaltige Folien mit einer reduzierten Dichte. Diese Folien sind ebenfalls dreischichtig. Ihre Basisschicht besteht aus einem Propylenpolymeren mit einem Schmelzflußindex von 1,5 bis 18 und einer Polydispersität von 3,0 bis 5,5 und vakuoleniniziierenden Füllstoffen. Die gewünschte Polydispersität wird beispielsweise durch eine Reaktion des Polymeren mit Peroxiden erzielt.

Die Aufgabe der vorliegenden Erfindung bestand darin, eine biaxial orientierte, beidseitig siegelbare Polyolefinmehrschichtfolie zur Verfügung zu stellen, welche neben den oben erwähnten wichtigen Eigenschaften gleichzeitig hervorragende optische Eigenschaften, d. h. niedrige Trübung und hohen Glanz, besitzen soll.

Gelöst wird diese Aufgabe durch eine Mehrschichtfolie der eingangs genannten Gattung, deren kennzeichnende Merkmale darin zu sehen sind, daß

a) die Basisschicht der Mehrschichtfolie ein Propylenhomopolymerisat enthält, das peroxidisch abgebaut ist, wobei sein Abbaufaktor A im Bereich von 3 bis 10 liegt und dieser Abbaufaktor A definiert ist als

$$A = \frac{S_{G(PP)}}{S_{P(PP)}}$$

worin $S_{G(PP)}$ der Schmelzindex des abgebauten Propylenhomopolymer-Granulats ist und im Bereich von 2 bis 5,5 g/10 min liegt und

worin $S_{P(PP)}$ der Schmelzindex des Propylenhomopolymer-Ausgangspulvers ist und bei kleiner als 1,5 g/10 min liegt, und

das peroxidisch abgebaute Propylenhomopolymere zum überwiegenden Teil aus Propyleneinheiten besteht und einen Schmelzpunkt im Bereich von 162 bis 168 °C besitzt, und

b) das siegelbare Olefinpolymere der Deckschichten ein Ethylen-Propylen-Copolymerisat mit einem Ethylengehalt im Bereich von 2 bis 8 Gew.-% enthält, bezogen auf das Gesamtgewicht des Copolymerisates, das auch peroxidisch abgebaut ist, wobei sein Abbaufaktor A im Bereich von 3 bis 15 liegt und dieser Abbaufaktor A definiert ist als

$$A = \frac{S_{G(Cop.)}}{S_{P(Cop.)}}$$

worin $S_{G(Cop.)}$ der Schmelzindex des abgebauten Ethylen-Propylen-Copolymer-Granulats ist und im Bereich von 5,5 bis 15 g/10 min liegt und

worin $S_{P(Cop.)}$ der Schmelzindex des Ethylen-Propylen-Copolymer-Ausgangspulvers ist und bei kleiner 3,0 g/10 min liegt, und

das peroxidisch abgebaute Ethylen-Propylen-Copolymer einen Schmelzpunkt hat, der niedriger als der Schmelzpunkt des Propylenhomopolymeren der Basisschicht ist und im Bereich von 80 bis 160 °C liegt, und

c) die Schichtdicke der Siegelschichten größer als 0,3 µm ist und

d) die jeweiligen Schmelzindices nach DIN 53 735 bei 21,6 N und 230 °C bestimmt werden.

Die erfindungsgemäße Mehrschichtfolie zeichnet sich durch eine sehr niedrige Trübung, einen sehr hohen Glanz und eine universelle Brauchbarkeit auf schnelllaufenden Verpackungsmaschinen aus. Insbesondere weist die erfindungsgemäße Folie eine Trübung von weniger als 17 %, vorzugsweise im Bereich von 16 bis 12 % auf. Ihr Glanz, gemessen bei einem Einstrahlwinkel von 20°, beträgt wenigstens 110, vorzugsweise liegt er im Bereich von 115 bis 130.

Die Deckschichten können jeweils auf ihrer freien Oberfläche corona- oder flammbehandelt sein.

Die Schichtdicke der Siegelschichten ist erfindungsgemäß größer als 0,3 µm, vorzugsweise im Bereich von 0,4 bis 1,5 µm.

Die Basisschicht besteht aus einem peroxidisch abgebauten Propylenpolymeren, das zum überwiegenden Teil aus Propyleneinheiten besteht und einen Schmelzpunkt in Bereich von 162 bis 168 °C besitzt. Isotaktisches Polypropylen mit einem n-heptanlöslichen Anteil von 6 Gew.-% und weniger stellt ein bevorzugtes Propylenpolymeres dar. Um die geforderte gute Optik zu erreichen, hat das peroxidisch abgebaute Propylenhomopolymerisat einen Abbaufaktor A von 3 bis 10, vorzugsweise von 4 bis 8. Der Schmelzindex des Polypropylen-Ausgangspulvers liegt bei kleiner 1,5 g/10 min, vorzugsweise bei 0,2 bis 0,9 g/10 min (Messung DIN 53 735, 21,6 N Belastung und 230 °C). Das Polypropylen-Ausgangspulver wird durch Zusatz von organischen Peroxiden [z. B. Dialkylperoxide wie 2,5Dimethyl-2,5-di(t-butylperoxy)-hexan oder Di-t-butylperoxid] beim Extrudieren auf einen Granulat-Schmelzindex von 2 bis 5,5 g/10 min (Messung DIN 53 735, 21,6 N Belastung und 230 °C) abgebaut. Der Abbaufaktor A des Propylenhomopolymerisates ist definiert als

$$A = \frac{S_{G(PP)}}{S_{P(PP)}}$$

mit $S_{G(PP)}$ = Schmelzindex des abgebauten PP-Granulates
und $S_{P(PP)}$ = Schmelzindex des PP-Ausgangspulvers, wobei
der Schmelzindex nach DIN 53 735 (21,6 N Belastung, 230 °C) gemessen wird.

Das siegelbare Olefinpolymere der Deckschicht enthält ein peroxidisch abgebautes Ethylen-Propylen-Copolymerisat, das vorzugsweise einen Ethylengehalt von 3 bis 7 Gew.-% besitzt. Um die geforderte gute Optik zu erreichen, hat das peroxidisch abgebaute Copolymerisat einen Abbaufaktor A von 3 bis 15, vorzugsweise von 6 bis 10. Der Schmelzindex des $C_2/C_3$-Ausgangspulvers liegt bei kleiner 3,0 g/10 min (Messung DIN 53 735, 21,6 N Belastung und 230 °C). Das $C_2/C_3$-Ausgangspulver wird durch Zusatz von organischen Peroxiden vor dem Extrudieren auf einen Granulatschmelzindex von 5,5 bis 15 g/10 min abgebaut, so daß der Schmelzindex des Copolymeren größer ist als der des Polypropylens der Basisschicht. Der Abbaufaktor A des Ethylen-Propylen-Copolymerisates ist definiert als

$$A = \frac{S_{G(Cop.)}}{S_{P(Cop.)}}$$

mit $S_{G(Cop.)}$ = Schmelzindex des abgebauten Ethylen-Propylen-Copolymer-Granulatesund
$S_{P(Cop.)}$ = Schmelzindex des Ethylen-Propylen-Copolymer-Ausgangspulvers,
wobei der Schmelzindex nach DIN 53 735 (21,6 N Belastung, 230 °C) gemessen wird.

Der peroxidische Abbau bzw. peroxidisch abgebaute oder CR ("controlled rheology") Polypropylen-Homopolymere als solche sind in der Literatur bekannt (vgl. Plastverarbeiter, 38. Jahrgang, 1987, Nr. 4; Polymer Engineering and Science, März 1989, Vol. 29, No. 6; Plastverarbeiter, 36. Jahrgang, 1985, Nr. 11). Derartige peroxidisch abgebaute Propylenhomopoymere kommen insbesondere bei der Spritzgußtechnik und der Faserherstellung zum Einsatz. Peroxidisch abgebaute $C_2/C_3$-Copolymere mit einem $C_2$-Gehalt von

3

1 bis 2,5 Gew.-% werden teilweise auch für unverstreckte Bürofolien (Organisationssektor) eingesetzt. Wie groß der Abbaufaktor bei diesen Produkten ist, wird aber nicht beschrieben.

Der Ethylengehalt des Copolymeren wird mit Hilfe der $^{13}$C-NMR-Spektroskopie bestimmt. Die Messungen wurden mit einem Kernresonanzspektrometer der Firma Bruker, Modell HX-270 (Deutschland), das mit einem Rechner der Firma Bruker, Typ Bruker Aspect 2000 ausgerüstet war, durchgeführt. Das zu charakterisierende Ethylen-Propylen-Copolymere wird hierzu in einem Lösungsmittelgemisch aus 65 Vol-% Hexachlorbenzol und 35 Vol-% 1,1-Dideuterotetrachlorethan gelöst, so daß eine 10 Gew.-%-Lösung entsteht. Als Bezugsstandard wird Octamethyltetrasiloxan (CMTS) zugegeben. Das 67,9-MHz-$^{13}$C-Kernresonanzspektrum wird bei 130 °C gemessen. Die Auswertung der Spektren erfolgt nach der in J. C. Randall, Polymer Sequence Distribution (Academic Press, New York, 1977) beschriebenen Vorgehensweise.

Das Olefinpolymere der Siegelschichten hat einen niedrigeren Schmelzpunkt als das Propylenpolymere der Basisschicht. Der Schmelzpunkt des Olefinpolymeren liegt im allgemeinen im Bereich von 80 bis 160 °C, vorzugsweise 100 bis 140 °C.

Überraschenderweise hat sich gezeigt, daß die Kombination der genannten Parameter für das Propylenhomopolymerisat der Basisschicht und für das Ethylen-Propylen-Copolymerisat der Deckschichten sowie die Deckschichtdicken der erfindungsgemäßen Folie in engen Grenzen eingehalten werden müssen, um alle in der Aufgabenstellung genannten Eigenschaften gleichzeitig optimal zu erfüllen.

Liegt der Abbaufaktor des Propylenhomopolymerisates unter 3 verschlechtern sich die optischen Eigenschaften (deutliche Erhöhung der Folientrübung, Erniedrigung des Oberflächenglanzes). Liegt der Abbaufaktor über 10 treten Probleme bei der Verstreckung auf, was sich äußerst negativ auf die Laufsicherheit bei der Folienproduktion auswirkt. Bei einem Abbaufaktor über 10 ist das Propylenhomopolymere nur noch in einem sehr engen Temperaturbereich oder gar nicht mehr verstreckbar.

Der Ethylengehalt des Copolymerisates ist für die Siegelfähigkeit von Bedeutung. Liegt der Ethylengehalt unter 2% ist die Folie nur noch bei deutlich höheren Temperaturen oder garnicht mehr siegelbar. Falls die Folie bedruckt oder metallisiert werden soll, ist der Ethylengehalt des Copolymerisates für die Oberflächenbehandelbarkeit mittels elektrischer Coronaentladung oder Flamme und für die Langzeitstabilität der Hafteigenschaften von besonderer Bedeutung. Liegt der Ethylengehalt unter 2 Gew.-%, ist die Coronabehandelbarkeit schlecht und das Abklingverhalten der Behandlungsintensität ungünstig.

Liegt der Abbaufaktor des $C_2/C_3$-Copolymerisates unter 3, verschlechtern sich die optischen Eigenschaften (Erhöhung der Folientrübung, Erniedrigung des Oberflächenglanzes). Liegt der Abbaufaktor über 15, treten Probleme bei der Verstreckung auf.

Liegt der Schmelzindex des $C_2/C_3$-Pulvers über 3 g/10 min (21,3 N/230 °), so ergibt sich durch den bevorzugten Abbaufaktor von 6 bis 10 ein zu hoher Schmelzindex des $C_2/C_3$-Granulates. Durch einen zu hohen Viskositätsunterschied zwischen dem Polypropylen-Basismaterial und der Copolymerisatdeckschicht treten unerwünschte Fließstörungen in der Schmelze auf.

Liegt die Deckschichtdicke unter 0,4 $\mu$m insbesondere unter 0,3 $\mu$m, verschlechtern sich die Siegeleigenschaften und die Coronabehandelbarkeit. Außerdem ist das Langzeitverhalten der Vorbehandlungsintensität ungünstig.

Um bestimmte Eigenschaften der erfindungsgemäßen Polyolefinfolie noch weiter zu verbessern, können sowohl die Basisschicht als auch die beiden Deckschichten entsprechende Zusätze in einer jeweils wirksamen Menge enthalten, vorzugsweise Antistatika, Antiblockmittel, Gleitmittel, Stabilisatoren und/oder niedrigmolekulare Harze, die mit den Poymeren der Basischicht und der Siegelschichten verträglich sind.

Bevorzugte Antistatika sind Alkalialkansulfonate, polyethermodifizierte, das sind ethoxylierte und/oder propoxylierte Polydiorganosiloxane (Polydialkylsiloxane, Polyalkylphenylsiloxane und dergleichen) und /oder die im wesentlichen geradkettigen und gesättigten aliphatischen, tertiären Amine mit einem aliphatischen Rest mit 10 bis 20 Kohlenstoffatomen, die mit 2 Hydroxyalkyl-($C_1$-$C_4$)-Gruppen substituiert sind, worunter N,N-bis(2-hydroxyethyl)-alkylamine mit $C_{10}$-$C_{20}$, vorzugsweise $C_{12}$-$C_{18}$ als Alkylgruppen besonders geeignet sind. Die wirksame Menge an Antistatikum liegt im Bereich von 0,05 bis 3 Gew.-%, bezogen auf das Gewicht der die antistatischen Mittel enthaltenden Schicht.

Geeignete Antiblockmittel sind anorganische Zusatzstoffe, wie Siliciumdioxid, Calciumcarbonat, Magnesiumsilicat, Aluminiumsilicat, Calciumphosphat und dergleichen, nichtionogene Tenside, anionenaktive Tenside und/oder unverträgliche organische Poymerisate, wie Polyamide, Polyester, Polycarbonate und dergleichen. Die wirksame Menge an Antiblockmittel liegt im Bereich von 0,1 bis 2 Gew.-%, bezogen auf das Gewicht der die Antiblockmittel enthaltenden Schicht.

Als Gleitmittel eignen sich höhere aliphatische Säureamide, Wachse, Metallseifen und Polydiorganosiloxane, vorzugsweise Polydialkylsiloxane. Die wirksame Menge beträgt im allgemeinen 0,1 bis 2,5 Gew.-% bezogen auf das Gewicht der die Gleitmittel enthaltenden Schicht.

Als Stabilisatoren können die üblichen stabilisierend wirkenden Verbindungen für Ethylen-, Propylen- und anderen α-Olefinpolymeren eingesetzt werden. Die wirksame Menge beträgt im allgemeinen 0,1 bis 2 Gew.-% bezogen auf das Gewicht der die Stabilisatoren enthaltenden Schicht.

Bei dem empfohlenen niedrigmolekularen Harz handelt es sich um ein natürliches oder synthetisches Harz mit einem Erweichungspunkt von 60 bis 180 °C, vorzugsweise 80 bis 150 °C (bestimmt nach ASTM E-28). Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Enzyklopädie der Techn. Chemie, 4.Auflage, Band 2, Seiten 539 bis 553, beschrieben). Die bevorzugte Menge an niedrigmolekularem Harz beträgt 3 - 15 Gew.-%, vorzugsweise 5 - 10 Gew.-% bezogen auf das Gewicht der die Harze enthaltenden Schicht.

Die Dicke der erfindungsgemäßen Polyolefinmehrschichtfolie kann innerhalb weiter Grenzen variieren und richtet sich insbesondere nach dem beabsichtigten Einsatz. Ihre Gesamtdicke beträgt im allgemeinen 10 bis 50 $\mu$m, vorzugsweise 20 bis 40 $\mu$m, wobei die Siegelschichten jeweils größer 0,3 $\mu$m, vorzugsweise 0,4 - 1,5 $\mu$m dick sind (die Dicke der Basisschicht macht etwa 50 bis 90 % der Gesamtfoliendicke aus).

Die Herstellung der erfindungsgemäßen Mehrschichtfolie, wobei die Deckschichten gleiche oder unterschiedliche Zusammensetzung aufweisen können, erfolgt nach dem bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung abgekühlt wird, die Folie biaxial gestreckt (orientiert), die biaxial gestreckte Folie thermofixiert und dann an der zur Coronabehandlung vorgesehenen Oberflächenschicht coronabehandelt wird. Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist. In Längsrichtung wird vorzugsweise 4 bis 7:1 und in Querrichtung vorzugsweise 8 bis 10:1 gestreckt. Die Längsstreckung wird bei einer Folientemperatur von vorzugsweise 120 bis 140 °C durchgeführt und die Querstreckung vorzugsweise 160 bis 175 °C. Das Längsstrecken wird zweckmäßigerweise mit Hilfe zweier entsprechend dem angestrebten Streckverhältnis verschieden schnellaufender Walzen durchgeführt und das Querstrecken mit Hilfe eines entsprechenden Kluppenrahmens. An die biaxiale Streckung der Folie schließt sich ihre Thermofixierung (Wärmebehandlung) an. Dabei wird die Folie etwa 0,5 bis 10 s lang bei einer Temperatur von 150 bis 160 °C gehalten.

Ist es erwünscht, daß die Poleolefinmehrschichtfolie bedruckbar oder metallisierbar sein soll, wird die Folie coronabehandelt. Die elektrische Coronabehandlung erfolgt vorzugsweise mit einer Wechselspannung von etwa 10000 V und 10000 Hz, je nach Wunsch ein- oder beidseitig. Die so hergestellte Folie wird in üblicher Weise mit Hilfe einer Aufwickeleinrichtung aufgewickelt und besitzt direkt nach der Herstellung eine Oberflächenspannung auf der behandelten Seite von 36 bis 42 mN/m, vorzugsweise von 38 bis 40 mN/m.

Die erfindungsgemäße Polyolefinmehrschichtfolie eignet sich insbesondere als Verpackungsfolie auf schnell laufenden Verpackungsmaschinen. Sie besitzt nämlich all die wichtigen Eigenschaften, die von Polyolefinfolien im Hinblick auf schnell laufende Maschinen gefordert werden. Sie weist insbesondere eine beidseitige Siegelbarkeit, hohe Kratzfestigkeit, gute Laufeigenschaften, sehr gute optische Eigenschaften, insbesondere einen hohen Glanz und eine niedrige Trübung sowie gleichzeitig eine gute Bedruckbarkeit auf.

Da die erfindungsgemäße Polyolefinmehrschichtfolie nach der Coronabehandlung auch gute Sofort- und Langzeitbeschichtbarkeitseigenschaften zeigt, eignet sie sich ebenfalls für die Herstellung von Laminaten mit Papier, mit Pappe, mit Metallen, mit metallisierten Kunststoffolien und mit Kunststoffolien sowie als Trägerfolie für wäßrige Barrierebeschichtungssystme, z. B. auf Basis von wäßrigen Dispersionen von Polyvinylidenchlorid oder Ethylenvinylalkohol-Copolymeren. Sie läßt sich auch hervorragend mit wäßrigen Druckfarben bedrucken, z. B. mit Zweikomponentenreaktivfarbstoffen.

Verzichtet man auf die Coronabehandlung, so eignet sich die erfindungsgemäße Polyolefinmehrschichtfolie insbesondere als Zigaretteneinschlagfolie, da sie neben den wichtigen Eigenschaften, die im Hinblick auf schnell laufende Verpackungsmaschinen gefordert werden, eine extrem niedrige Trübung und einen sehr hohen Glanz besitzt.

Die Erfindung wird nachfolgend anhand von Ausführungsbeispielen noch näher erläutert:

Bei den Folien der Beispiele und der Vergleichsbeispiele handelt es sich jeweils um biaxial orientierte (Längsstreckverhältnis 5:1, Querstreckverhältnis 10:1), transparente Polyolefinfolien mit einer Basisschicht, die aus einem isotaktischen Polypropylen mit einem n-heptanlöslichen Anteil von 4,5 Gew.-% und einem Schmelzpunkt von 165 °C als Hauptkomponente besteht. Die Basisschicht ist etwa 19 $\mu$m dick und die beiden Siegelschichten, welche die Basisschicht überziehen, sind jeweils 0,8 $\mu$m dick. Es werden Folien mit der Schichtreihenfolge A-B-A hergestellt, wobei A die Deckschicht und B die Basisschicht repräsentieren. Die dreischichtigen Polyolefinfolien sind nach dem bekannten Coextrusionsverfahren hergestellt worden.

Alle Schichten enthalten zur Stabilisierung 0,12 Gew.-% Pentaerythrityl-Tetrakis-3-(3,5-ditertiärbutyl-4-hydroxyphenyl)-propionat (Irganox 1010[R]) sowie zur Neutralisierung saurer Katalysatorreste 0,06 Gew.-% Calciumstearat. Die Basisschicht enthält weiterhin 0,15 Gew.-% an N,N-bis-(2-hydroxyethyl)-($C_{10}$-$C_{20}$)-alkylamin (Armostat 300 [R]) als Antistatikum.

Beispiel 1

Das (isotaktische) Propylenhomopolymerisat der Basisschicht wird von einem Polypropylen-Ausgangspulver mit einem Schmelzindex $S_{P(PP)}$ von 0,7 g/10 min (bestimmt nach DIN 53735 bei 21,6 N Belastung und 230 °C) durch Zusatz von Di-t-butylperoxid auf einen Granulatschmelzindex $S_{G(PP)}$ von 3,5 g/10 min (DIN 53 735 bei 21,6 N Belastung und 230 °C) abgebaut, woraus sich ein Abbaufaktor A von 5 ergibt.

Das statistische Ethylen-Propylen-Copolymerisat der Siegelschichten wird von einem Ausgangspulver-Schmelzindex $S_{P(Cop.)}$ von 0,7 g/10 min (DIN 53 735 bei 21,6 N Belastung und 230 °C) durch Zusatz von Di-t-butylperoxid auf einen Granulatschmelzindex von 5,6 g/10 min (DIN 53 735 bei 21,6 N Belastung und 230 °C) abgebaut, woraus sich ein Abbaufaktor A von 8 ergibt. Das peroxidisch abgebaute Ethylen-Propylen-Copolymerisat besitzt einen Ethylengehalt von 4,0 Gew.-% und ist mit 0,8 Gew.-% Polydimethylsiloxan mit einer Viskosität von 30.000 $mm^2$/s bei 25 °C und 0,3 Gew.-% Siliciumdioxid mit einem mittleren Teilchendurchmesser von 2 $\mu$m ausgerüstet.

Beispiel 2

Das (isotaktische) Propylenhomopolymerisat der Basisschicht wird von einem Polypropylen-Ausgangspulver mit einem Schmelzindex $S_{P(PP)}$ von 0,5 g/10 min (bestimmt nach DIN 53 735 bei 21,6 N Belastung und 230 °C) durch Zusatz von Di-t-butylperoxid auf einen Granulatschmelzindex $S_{G(PP)}$ von 3,5 g/10 min (DIN 53 735 bei 21,6 N Belastung und 230 °C) abgebaut, woraus sich ein Abbaufaktor A von 7 ergibt.

Das statistische Ethylen-Propylen-Copolymerisat der Siegelschichten wird von einem Ausgangspulver-Schmelzindex $S_{P(Cop.)}$ von 0,6 g/10 min (DIN 53 735 bei 21,6 N Belastung und 230 °C) durch Zusatz von Di-t-butylperoxid auf einen Granulatschmelzindex $S_{G(Cop.)}$ von 6,0 g/10 min (DIN 53 735 bei 21,6 N Belastung und 230 °C) abgebaut, woraus sich ein Abbaufaktor A von 10 ergibt. Das peroxidisch abgebaute Ethylen-Propylen-Copolymerisat besitzt einen Ethylengehalt von 4,0 Gew.-% und ist mit 0,8 Gew.-% Polydimethylsiloxan mit einer Viskosität von 30.000 $mm^2$/s bei 25 °C und 0,3 Gew.-% Siliciumdioxid mit einem mittleren Teilchendurchmesser von 2 $\mu$m ausgerüstet.

Beispiel 3

Das Propylenhomopolymerisat der Basisschicht und das statistische Ethylen-Propylen-Copolymerisat der Siegelschichten werden wie in Beispiel 1 peroxidisch abgebaut. Die hergestellte Dreischichtfolie besitzt jetzt allerdings einen A-B-C-Aufbau (A und C = Siegelschichten, B = Basisschicht), wobei das peroxidisch abgebaute Ethylen-Propylen-Copolymere der A-Schicht 1,6 Gew.-% Polydimethylsiloxan mit einer Viskosi-tät von 30000 $mm^2$/s bei 25 °C und 0,3 Gew.-% Siliciumdioxid mit einem mittleren Teilchendurchmesser von 2 $\mu$m enthält. Das peroxidisch abgebaute Copolymerisat der C-Schicht enthält 0,3 Gew.-% Siliciumdioxid mit einem mittleren Teilchendurchmesser von 2 $\mu$m und kein Polydimethylsiloxan. Die C-Schicht wird coronabehandelt, wobei die Oberflächenspannung dieser Seite direkt nach der Herstellung bei 40 mN/m liegt.

Beispiel 4

Das Propylenhomopolymerisat der Basisschicht und das statistische Ethylen-Propylen-Copolymerisat der Siegelschichten werden wie in Beispiel 2 peroxidisch abgebaut. Die hergestellte Dreischichtfolie besitzt wie in Beispiel 3 einen A-B-C-Aufbau (A und C = Siegelschichten, B = Basisschicht), wobei das peroxidisch abgebaute Ethylen-Propylen-Copolymerisat der A-Schicht 2,4 Gew.-% Polydimethylsiloxan mit einer Viskosität von 30.000 $mm^2$/s bei 25 °C und 0,3 Gew.-% Siliciumdioxid mit einem mittleren Teilchendurchmesser von 2 $\mu$m enthält. Das peroxidisch abgebaute Copolymerisat der C-Schicht enthält 0,3 Gew.-% Siliciumdioxid mit einem mittleren Teilchendurchmesser von 2 $\mu$m und kein Polydimethylsilo-xan. Wie in Beispiel 3 wird die C-Schicht coronabehandelt, wobei die Oberflächenspannung dieser Seite direkt nach der Herstellung bei 40 mN/m liegt.

Beispiel 5

Das Propylenhomopolymerisat der Basisschicht und das statistische Ethylen-Propylen-Copolymerisat der Siegelschichten werden wie in Beispiel 2 peroxidisch abgebaut. Das peroxidisch abgebaute Copolymerisat besitzt aber einen Ethylengehalt von 6,0 Gew.-%. Die A- und die C-Schicht sind wie in Beispiel 3 rezepturiert, wobei die C-Schicht wie in Beispiel 3 coronabehandelt wird.

Vergleichsbeispiel 1

Es wird eine Dreischichtfolie hergestellt wie in Beispiel 2. Das isotaktische Propylenhomopolymerisat besitzt ebenfalls einen Granulatschmelzindex von 3,5 g/10 min (DIN 53 735 bei 21,6 N Belastung und 230 °C), ist aber <u>nicht</u> peroxidisch abgebaut.

Das statistische Ethylen-Propylen-Copolymerisat der Deckschichten wird wie in Beispiel 2 peroxidisch abgebaut und ist wie in Beispiel 2 mit Additiven ausgerüstet.

Vergleichsbeispiel 2

Es wird eine Dreischichtfolie hergestellt wie in Beispiel 2. Das Polypropylenpolymere der Basisschicht besitzt ebenfalls einen Granulatschmelzindex von 3,5 g/10 min (DIN 53 735 bei 21,6 N Belastung und 230 °C), ist aber <u>nicht</u> peroxidisch abgebaut.

Das statistische Ethylen-Propylen-Copolymerisat ist wie in Beispiel 2 rezepturiert und besitzt wie in Beispiel 2 einen Granulatschmelzindex von 6,0 g/10 min (DIN 53 735 bei 21,6 N Belastung und 230 °C). Das statistische Ethylen-Propylen-Copolymerisat der Deckschichten ist allerdings <u>nicht</u> peroxidisch abgebaut.

Vergleichsbeispiel 3

Es wird eine Dreischichtfolie mit einem A-B-C-Aufbau wie in Beispiel 5 hergestellt. Weder das Propylenhomopolymerisat der Basisschicht noch das statistische Ethylen-Propylen-Copolymerisat der Siegelschichten sind peroxidisch abgebaut.

Vergleichsbeispiel 4

Es wird eine Dreischichtfolie mit einem ABC-Aufbau entsprechend Beispiel 1 der Europäischen Patentschrift 0194588 hergestellt.

Vergleichsbeispiel 5

Es wird eine Dreischichtfolie entsprechend Beispiel 4 der US-Patentschrift 4419 411 hergestellt.

Zur Charakterisierung der Rohstoffe und Folien wurden folgende Meßmethoden benutzt:

Etyhlengehalt

Wie bereits beschrieben.

Schmelzindex:

DIN 53 735 bei 230 °C und 21,6 N Belastung

Trübung:

Die Trübung der Folie wird in Anlehnung an ASTM-D 1003-52 gemessen, wobei anstelle einer 4°-Lochblende eine 1°-Spaltblende eingesetzt und die Trübung in Prozent für vier übereinanderliegende Folienlagen angegeben wird. Die vier Lagen wurden gewählt, da man hierdurch den optimalen Meßbereich ausnutzt. Die Trübungsbewertung erfolgte mit:

≦ 17 % = sehr gut ( + + )

≧ 17 % bis 20 % = gut ( + )

≧ 20 % bis 25 % = mäßig (±)

7

≧ 25 % = schlecht (-)

Glanz:

Der Glanz wird nach DIN 67 530 bestimmt. Gemessen wird der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden. Die Glanzbewertung (Einstrahlwinkel 20°) erfolgt mit:

≧ 115 = sehr gut (+ +)
≦ 115 bis 110 = gut (+)
≦ 110 bis 100 = mäßig (±)
≦ 100 = schlecht (-)

Kratzfestigkeit bzw. Kratzempfindlichkeit:

Die Kratzfestigkeit wird in Anlehnung an DIN 53 754 bestimmt.

Für die Bestimmung der Kratzfestigkeit wird das Abriebmeßgerät Taber Modell 503 Abraser der Firma Teledyne Taber benutzt, wobei Reibräder der Marke Calibrade R H18, die mit 250 g belastet werden, eingesetzt werden. Unter Kratzfestigkeit bzw. Kratzempfindlichkeit versteht man die Trübungszunahme der verkratzten Folie im Vergleich zur Originalfolie nach 50 Umdrehungen des Probentellers. Die Kratzfestigkeit wird mit sehr gut (+ +) bezeichnet, wenn die Trübungszunahme ≦ 22 % beträgt, mit gut (+), wenn die Trübungszunahme bei 22 bis 25 % liegt, mit mäßig (±), wenn die Trübungszunahme bei 25 - 30 % liegt und mit schlecht (-) bei Trübungszunahmen von größer 30 %.

Bestimmung der Siegelnahtfestigkeit:

Zwei 15 mm breite Streifen werden übereinander gelegt und bei 130 °C, einer Siegelzeit von 0,1 s und einem Siegeldruck von 1,5 N/cm$^2$ versiegelt. Die Siegelfestigkeit wird nach der T-Peel-Methode bestimmt.

Bestimmung der Coronabehandlungsintensität:

Die Coronabehandlung wird so ausgeführt, daß die behandelte Folienoberfläche jeweils eine Behandlungsintensität von 40 mN/m direkt nach der Behandlung besaß. Die Behandlungsintensität wird mittels der sogenannten Tintenmethode (DIN 53 364) bestimmt.

Bestimmung der Bedruckbarkeit:

Die coronabehandelten Folien werden 14 Tage nach ihrer Produktion (Kurzzeitbeurteilung) bzw. 6 Monate nach ihrer Produktion (Langzeitbeurteilung) bedruckt. Die Farbhaftung wird mittels Klebebandtest beurteilt. Können mittels Klebeband geringe Mengen an Farben abgelöst werden, so wird die Farbhaftung mit mäßig und bei deutlicher Farbablösung mit schlecht beurteilt.

In der nachstehenden Tabelle 1 sind die Eigenschaften der dreischichtigen Polyolefinfolien der Beispiele und Vergleichsbeispiele zusammengefaßt.

Wie die Ergebnisse zeigen, sind die erfindungsgemäßen dreischichtigen Polyolefinfolien jenen des Standes der Technik deutlich überlegen. Nur die erfindungsgemäßen Folien erfüllen die hohen Forderungen bezüglich sehr niedriger Folientrübung, hohem Oberflächenglanz, guter Kratzfestigkeit, beidseitiger Siegelbarkeit und Laufeigenschaften (Maschinengängigkeit) bei gleitzeitig guter Bedruckbarkeit, und zeichnen sich somit durch einen universellen Einsatz als Verpackungsfolie und durch universelle Brauchbarkeit auf schnell laufenden Verpackungsmaschinen aus.

Tabelle 1:

| | Trübung 4-lagig | Glanz (Meßwinkel 20°) 1.Seite/2.Seite | Kratzfestigkeit | Siegelbarkeit 1.Seite/*2.Seite | Maschinen- gängigkeit | Bedruckbarkeit |
|---|---|---|---|---|---|---|
| Beispiel 1 | + + | + +/+ + | + + | + +/+ + | + + | (* *) |
| Beispiel 2 | + + | + +/+ + | + + | + +/+ + | + + | (* *) |
| Beispiel 3 | + + | + +/+ + | + + | + +/+ | + + | + + |
| Beispiel 4 | + + | + +/+ + | + + | + +/+ | + + | + + |
| Beispiel 5 | + + | + +/+ + | + + | + +/+ + | + + | + + |
| Vergleichsbsp. 1 | ± | ±/± | + | + +/+ + | + + | (* *) |
| Vergleichsbsp. 2 | - | -/- | ± | + +/+ + | + + | (* *) |
| Vergleichsbsp. 3 | - | -/- | ± | + +/+ + | + + | + + |
| Vergleichsbsp. 4 | - | -/- | ± | + +/+ | + | + + |
| Vergleichsbsp. 5 | - | -/- | ± | +/- | + | + + |

(*) 2. Seite: Falls eine Coronabehandlung erfolgte, wurde die 2. Seite (C-Schicht) coronabehandelt
** : Diese Dreischichtfolien wurden nicht coronabehandelt

In der Tabelle bedeuten:      + + : sehr gut      + : gut
                              ± : mäßig      - : schlecht

**Patentansprüche**

1. Beidseitig siegelbare transparente, coextrudierte Polyolefinmehrschichtfolie mit einer Basisschicht im wesentlichen aus Propylenpolymeren, die peroxidisch abgebaut sind, und Deckschichten im wesentli-

9

chen aus siegelbaren Olefinpolymeren, dadurch gekennzeichnet, daß

a) die Basisschicht der Mehrschichtfolie ein Propylenhomopolymerisat enthält, das peroxidisch abgebaut ist, wobei sein Abbaufaktor A im Bereich von 3 bis 10 liegt und dieser Abbaufaktor A definiert ist als

$$A = \frac{S_{G(PP)}}{S_{P(PP)}}$$

worin $S_{G(PP)}$ der Schmelzindex des abgebauten Propylenhomopolymer-Granulats ist und im Bereich von 2 bis 5,5 g/10 min liegt und

worin $S_{P(PP)}$ der Schmelzindex des Propylenhomopolymer-Ausgangspulvers ist und bei kleiner als 1,5 g/10 min liegt, und

das peroxidisch abgebaute Propylenhomopolymere zum überwiegenden Teil aus Propyleneinheiten besteht und einen Schmelzpunkt im Bereich von 162 bis 168 °C besitzt, und

b) das siegelbare Olefinpolymere der Deckschichten ein Ethylen-Propylen-Copolymerisat mit einem Ethylengehalt im Bereich von 2 bis 8 Gew.-% enthält, bezogen auf das Gesamtgewicht des Copolymerisates, das auch peroxidisch abgebaut ist, wobei sein Abbaufaktor A im Bereich von 3 bis 15 liegt und dieser Abbaufaktor A definiert ist als

$$A = \frac{S_{G(Cop.)}}{S_{P(Cop.)}}$$

worin $S_{G(Cop.)}$ der Schmelzindex des abgebauten Ethylen-Propylen-Copolymer-Granulats ist und im Bereich von 5,5 bis 15 g/10 min liegt und

worin $S_{P(Cop.)}$ der Schmelzindex des Ethylen-Propylen-Copolymer-Ausgangspulvers ist und bei kleiner 3,0 g/10 min liegt, und

das peroxidisch abgebaute Ethylen-Propylen-Copolymer einen Schmelzpunkt hat, der niedriger als der Schmelzpunkt des Propylenhomopolymeren der Basisschicht ist und im Bereich von 80 bis 160 °C liegt, und

c) die Schichtdicke der Siegelschichten größer als 0,3 $\mu$m ist und

d) die jeweiligen Schmelzindices nach DIN 53 735 bei 21,6 N und 230 °C bestimmt werden.

2. Folie nach Anspruch 1, dadurch gekennzeichnet, daß die Deckschichten jeweils auf ihrer freien Oberfläche corona- oder flammbehandelt sind.

3. Folie nach Anspruch 1 oder 2, dadurch gekennzeichnet, daß die Schichtdicke der Siegelschichten im Bereich von 0,4 bis 1,5 $\mu$m liegt.

4. Folie nach einem der Ansprüche 1 bis 3, dadurch gekennzeichnet, daß das peroxidisch abgebaute Propylenhomopolymerisat der Basisschicht einen Abbaufaktor A von 4 bis 8 besitzt.

5. Folie nach einem der Ansprüche 1 bis 4, dadurch gekennzeichnet, daß das peroxidisch abgebaute Ethylen-Propylen-Copolymerisat einen Ethylengehalt von 3 bis 7 Gew.-% und einen Abbaufaktor A von 6 bis 10 besitzt.

6. Folie nach einem der Ansprüche 1 bis 5, dadurch gekennzeichnet, daß sie eine Trübung von weniger als 17 %, vorzugsweise im Bereich von l6-l2 % aufweist und daß ihr Glanz, gemessen bei einem Einstrahlwinkel von 20°, wenigstens ll0 beträgt, vorzugsweise im Bereich von ll5 bis l30 liegt.

7. Folie nach einem der Ansprüche 1 bis 6, dadurch gekennzeichnet, daß sie ein antistatisches Mittel in einer Menge im Bereich von 0,05 bis 3 Gew.-% enthält, bezogen auf das Gewicht der die antistatischen Mittel enthaltenden Schicht.

8. Folie nach einem der Ansprüche 1 bis 7, dadurch gekennzeichnet, daß sie ein Antiblockmittel in einer Menge von 0,1 bis 2 Gew.-% enthält, bezogen auf das Gewicht der die Antiblockmittel enthaltenden Schicht.

9. Folie nach einem der Ansprüche 1 bis 8, dadurch gekennzeichnet, daß sie Gleitmittel in einer Menge von 0,1 bis 2,5 Gew.-% enthält, bezogen auf das Gewicht der die Gleitmittel enthaltenden Schicht.

10. Folie nach einem der Ansprüche 1 bis 9, dadurch gekennzeichnet, daß sie eine Gesamtdicke im Bereich von 10 bis 50 $\mu$m besitzt, vorzugsweise von 20 bis 40 $\mu$m.

11. Verfahren zur Herstellung einer Mehrschichtfolie nach einem der Ansprüche 1 bis 10, bei dem die den einzelnen Schichten der Folie entsprechenden Schmelzen durch eine Flachdüse coextrudiert werden, die so erhaltene Folie zur Verfestigung abgekühlt wird, die Folie biaxial gestreckt, die biaxial gestreckte Folie thermofixiert und dann gegebenenfalls an der zur Coronabehandlung vorgesehenen Oberflächenschicht coronabehandelt wird, dadurch gekennzeichnet, daß die den einzelnen Schichten der Folie entsprechenden Polymerisate vor der Extrusion peroxidisch abgebaut werden.

12. Verwendung einer Folie nach einem der Ansprüche 1 bis 10 als Verpackungsfolie auf schnellaufenden Verpackungsmaschinen.

13. Verwendung einer Folie nach einem der Ansprüche 1 bis 10 zur Herstellung von Laminaten mit Papier, mit Pappe, mit Metallen, mit metallisierten Kunststoffolien und mit Kunststoffolien oder als Trägerfolie für wäßrige Barrierebeschichtungssystme.

14. Verwendung einer Folie nach einem der Ansprüche 1 bis 10 als Zigaretteneinschlagfolie.

**Claims**

1. A transparent, coextruded multilayer polyolefin film which is heat-sealable on both sides and has a base layer essentially comprising peroxidically degraded propylene polymers and outer layers essentially comprising heat-sealable olefin polymers, wherein
   a) the base layer of the multilayer film contains a peroxidically degraded propylene homopolymer, its degradation factor A being in the range from 3 to 10 and this degradation factor A being defined as

$$A = \frac{S_{G(PP)}}{S_{P(PP)}}$$

in which $S_{G(PP)}$ is the melt flow index of the degraded propylene homopolymer granules and is in the range from 2 to 5.5 g/10 min and
in which $S_{P(PP)}$ is the melt flow index of the propylene homopolymer starting powder and is less than 1.5 g/10 min, and
the peroxidically degraded propylene homopolymer comprises predominantly propylene units and has a melting point in the range from 162 to 168°C, and
   b) the heat-sealable olefin polymer of the outer layers contains an ethylene-propylene copolymer having an ethylene content in the range from 2 to 8% by weight, based on the total weight of the copolymer, which has also been peroxidically degraded, its degradation factor A being in the range from 3 to 15 and this degradation A being defined as

$$A = \frac{S_{G(cop.)}}{S_{P(cop.)}}$$

in which $S_{G(cop.)}$ is the melt flow index of the degraded ethylene-propylene copolymer granules and is in the range from 5.5 to 15 g/10 min and

in which $S_{P(cop.)}$ is the melt flow index of the ethylene-propylene copolymer starting powder and is less than 3.0 g/10 min, and

the peroxidically degraded ethylene-propylene copolymer has a melting point which is lower than the melting point of the propylene homopolymer of the base layer and is in the range from 80 to 160°C, and

c) the thickness of the heat-sealable layers is greater than 0.3 μm, and

d) the respective melt flow indices are determined in accordance with DIN 53 735 at 21.6 N and 230°C.

2. A film as claimed in claim 1, wherein the outer layers have each been corona- or flame-treated on their free surface.

3. A film as claimed in claim 1 or 2, wherein the thickness of the heat-sealing layers is in the range from 0.4 to 1.5 μm.

4. A film as claimed in any one of claims 1 to 3, wherein the peroxidically degraded propylene homopolymer of the base layer has a degradation factor A of from 4 to 8.

5. A film as claimed in any one of claims 1 to 4, wherein the peroxidically degraded ethylene-propylene copolymer has an ethylene content of from 3 to 7% by weight and a degradation factor A of from 6 to 10.

6. A film as claimed in any one of claims 1 to 5, which has a haze of less than 17%, preferably in the range from l6 - l2%, and a gloss, measured at an angle of incidence of 20°, of at least ll0, preferably in the range from ll5 to l30.

7. A film as claimed in any one of claims 1 to 6, which contains an antistatic agent in an amount in the range from 0.05 to 3% by weight, based on the weight of the layer containing the antistatic agent.

8. A film as claimed in any one of claims 1 to 7, which contains antiblocking agents in an amount of from 0.1 to 2% by weight, based on the weight of the layer containing the antiblocking agents.

9. A film as claimed in any one of claims 1 to 8, which contains lubricants in an amount of from 0.1 to 2.5% by weight, based on the weight of the layer containing the lubricants.

10. A film as claimed in any one of claims 1 to 9, which has an overall thickness in the range from 10 to 50 μm, preferably from 20 to 40 μm.

11. A process for the production of a multilayer film as claimed in any one of claims 1 to 10, in which the melts corresponding to the individual layers of the film are coextruded through a flat-film die, the resultant film is solidified by cooling, the film is biaxially stretched, the biaxial stretched film is thermofixed, and then, if appropriate, the surface layer intended for corona treatment is corona treated, which comprises peroxidically degrading the polymers corresponding to the individual layers of the film before the extrusion.

12. The use of a film as claimed in any one of claims 1 to 10 as a packaging film on high-speed packaging machines.

13. The use of a film as claimed in any one of claims 1 to 10 for the production of laminates with paper, with board, with metals, with metallized plastic films and with plastic films, or as a base film for aqueous barrier coating systems.

14. The use of a film as claimed in any one of claims 1 to 10, as a cigarette packaging film.

**Revendications**

1. Pellicule multicouche polyoléfinique coextrudée, transparente, soudable des deux côtés, comportant une couche de base essentiellement à base de polymères de propylène qui sont dégradés par un peroxyde, et des couches de recouvrement essentiellement à base de polymères oléfiniques soudables, caractérisée en ce que

a) la couche de base de la pellicule multicouche contient un homopolymère de propylène qui est dégradé par un peroxyde, son facteur de dégradation A étant dans la plage allant de 3 à 10, et ce facteur de dégradation A étant défini par le rapport

$$A = \frac{S_{G(PP)}}{S_{P(PP)}}$$

dans lequel

$S_{G(PP)}$     est l'indice de fluidité à chaud du produit granulé constitué d'homopolymère de propylène dégradé et se situe dans la plage allant de 2 à 5,5 g/10 min, et

$S_{P(PP)}$     est l'indice de fluidité à chaud de la poudre initiale d'homopolymère de propylène et est inférieur à 1,5 g/10 min, et

l'homopolymère de propylène dégradé par un peroxyde consiste en majeure partie en motifs propylène et a un point de fusion dans la plage de 162 à 168°C, et

b) le polymère oléfinique soudable des couches de recouvrement contient un copolymère éthylène/propylène ayant une teneur en éthylène dans la plage allant de 2 à 8 % en poids, par rapport au poids total du copolymère qui est lui aussi dégradé par un peroxyde, son facteur de dégradation A étant dans la plage allant de 3 à 15, et ce facteur de dégradation A étant défini par le rapport

$$A = \frac{S_{G(cop.)}}{S_{P(cop.)}}$$

dans lequel

$S_{G(cop.)}$     est l'indice de fluidité à chaud du produit granulé constitué du copolymère éthylène/propylène dégradé et se situe dans la plage allant de 5,5 à 15 g/10 min, et

$S_{P(cop.)}$     est l'indice de fluidité à chaud de la poudre initiale de copolymère éthylène/propylène et est inférieur à 3,0 g/10 min, et

le copolymère éthylène/propylène dégradé par un peroxyde a un point de fusion qui est inférieur au point de fusion de l'homopolymère de propylène de la couche de base et se situe dans la plage allant de 80 à 160°C, et

c) l'épaisseur des couches de soudage est supérieure à 0,3 $\mu$m, et

d) les indices de fluidité à chaud respectifs sont déterminés à 230°C et sous une charge de 21,6 N, selon DIN 53 735.

2. Pellicule selon la revendication 1, caractérisée en ce que les couches de recouvrement sont traitées chacune, sur leur face libre, à la flamme ou par effet couronne.

3. Pellicule selon la revendication 1 ou 2, caractérisée en ce que l'épaisseur des couches de soudage se situe dans la plage allant de 0,4 à 1,5 $\mu$m.

4. Pellicule selon l'une des revendications 1 à 3, caractérisée en ce que l'homopolymère de propylène dégradé par un peroxyde, de la couche de base, a un facteur de dégradation A allant de 4 à 8.

5. Pellicule selon l'une des revendications 1 à 4, caractérisée en ce que le copolymère éthylène/propylène dégradé par un peroxyde a une teneur en éthylène allant de 3 à 7% en poids et un facteur de dégradation A allant de 6 à 10.

6. Pellicule selon l'une des revendications 1 à 5, caractérisée en ce qu'elle présente une opacité inférieure à 17 %, de préférence dans la plage de 16 à 12 %, et en ce que son brillant, mesuré sous un angle incident de 20°, est d'au moins 110, de préférence se situe dans la plage allant de 115 à 130.

13

**7.** Pellicule selon l'une des revendications 1 à 6, caractérisée en ce qu'elle contient un agent antistatique en une proportion dans la plage allant de 0,05 à 3 % en poids, par rapport au poids de la couche contenant l'agent antistatique.

**8.** Pellicule selon l'une des revendications 1 à 7, caractérisée en ce qu'elle contient un agent anti-adhérence de contact, en une proportion de 0,1 à 2 % en poids, par rapport au poids de la couche contenant l'agent anti-adhérence de contact.

**9.** Pellicule selon l'une des revendications 1 à 8, caractérisée en ce qu'elle contient des lubrifiants, en une proportion de 0,1 à 2,5 % en poids, par rapport au poids de la couche contenant les lubrifiants.

**10.** Pellicule selon l'une des revendications 1 à 9, caractérisée en ce qu'elle a une épaisseur totale dans la plage allant de 10 à 50 $\mu$m, de préférence de 20 à 40 $\mu$m.

**11.** Procédé pour la fabrication d'une pellicule multicouche selon l'une des revendications 1 à 10, dans lequel les masses fondues correspondant aux couches individuelles de la pellicule sont extrudées à travers une filière plate, la pellicule ainsi obtenue est refroidie pour la solidification, la pellicule est étirée biaxialement, la pellicule étirée biaxialement est thermofixée et ensuite éventuellement traitée par effet couronne, pour le traitement par effet couronne de la couche superficielle prévue, caractérisé en ce que les polymères correspondant aux couches individuelles de la pellicule sont dégradés par un peroxyde avant l'extrusion.

**12.** Utilisation d'une pellicule selon l'une des revendications 1 à 10, en tant que pellicule d'emballage sur des machines d'emballage à grande vitesse.

**13.** Utilisation d'une pellicule selon l'une des revendications 1 à 10, pour la fabrication de stratifiés avec du papier, du carton, des métaux, des pellicules de matière plastique métallisées et des pellicules de matière plastique, ou en tant que feuille de support pour des systèmes de revêtement barrière aqueux.

**14.** Utilisation d'une pellicule selon l'une des revendications 1 à 10, en tant que pellicule de conditionnement de cigarettes.